(19) Europäisches Patentamt

European Patent Office

Office européen des brevets

(11) **EP 4 715 647 A1**

## (12) EUROPEAN PATENT APPLICATION

(43) Date of publication:
**25.03.2026 Bulletin 2026/13**

(21) Application number: **25170063.9**

(22) Date of filing: **11.04.2025**

(51) International Patent Classification (IPC):
*G06F 21/57* (2013.01)     *H04L 9/40* (2022.01)

(52) Cooperative Patent Classification (CPC):
**H04L 63/1433; G06F 21/577**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **23.09.2024 US 202418892984**

(71) Applicant: **Dynatrace LLC
Boston, Massachusetts 02210 (US)**

(72) Inventors:
• **ACHLEITNER, Stefan
Linz (AT)**
• **OBERAIGNER, Alexandra
Linz (AT)**
• **SCHWARZBAUER, Christian
Linz (AT)**

(74) Representative: **Bittner, Thomas L.
Boehmert & Boehmert
Anwaltspartnerschaft mbB
Pettenkoferstrasse 22
80336 München (DE)**

## (54) DETECTING CROSS-SITE SCRIPTING VULNERABILITIES IN WEB APPLICATIONS

(57) The present disclosure relates to the detection of cross-site scripting vulnerabilities in a web application. The objective of the disclosure is to find a computer-implemented method for detecting cross-site scripting vulnerabilities in a web application. The detection of XSS vulnerabilities shall be performed automatically and the number of false positives shall be reduced compared to the prior art.

Fig. 1

Processed by Luminess, 75001 PARIS (FR)

**Description**

Field

The present disclosure relates to the technical field of information technology. In particular, the disclosure relates to the automatic detection of cross-site scripting (short XSS) vulnerabilities in a web application. It is well known in the art that software vulnerabilities, in particular zero-day vulnerabilities, i.e. vulnerabilities for which no patch fixing the vulnerability exists, cause significant problems for software developers, vendors, operators, and affected end-users. Developers typically start working on a patch after they have been informed about a vulnerability, or it was detected that rogue parties are already exploiting the vulnerability. Generally, software developers and software vendors are interested in detecting and fixing vulnerabilities as soon as possible, in particular before vulnerabilities are being exploited.

Background

The detection of XSS vulnerabilities in web applications is currently done through scanning and fuzzing of software. Hereby specifically crafted payloads are sent to a web application, and the reply is analyzed to determine potential vulnerabilities. Zero-day vulnerabilities may be found in publicly available software that is probed by attackers to find new vulnerabilities. After having found a new vulnerability, attackers can exploit the vulnerability to attack the software or sell the knowledge about the new vulnerability to rogue actors who may attack parties running the software. The process of detecting XSS vulnerabilities known in the prior art involves a number of manual steps, e.g. to determine appropriate input parameters for probing. Furthermore, the detection is often based on assumptions, e.g. certain timing patterns, which may lead to false positives.
How to automate the detection of XSS vulnerabilities and at the same time to reduce the number of false positives is not known in the prior-art.
This section provides background information related to the present disclosure which is not necessarily prior art.

Summary

The objective of the disclosure is to find a computer-implemented method for detecting cross-site scripting vulnerabilities in a web application. The detection of XSS vulnerabilities shall be performed automatically and the number of false positives shall be reduced compared to the prior art.
The objective technical problem is solved by a computer-implemented method for detecting cross-site scripting vulnerabilities in a web application according to claim 1. Advantageous embodiments are described in the dependent claims.
In particular, the objective is solved by a computer-implemented method for detecting cross-site scripting vulnerabilities in a web application, comprising:

   receiving, by a computer processor, a listing of network requests made to a backend of a web application, each entry in the listing of network requests includes a network address and a key-value pair;
   for each unique combination of network address and key found in the listing of network requests, formulating, by the computer processor, a probing request using a given network address and a given key, where value of the key is set to a predefined payload and the predefined payload includes an identifying tag, such that the predefined payload is configured to trigger the backend of the web application to send a response which includes the identifying tag;
   sending, by the computer processor, the probing request to the backend of the web application;
   monitoring, by agents instrumented in the web application, responses to the probing requests; and
   reporting a vulnerability for the web application in response to the frontend requesting a target specified by the identifying tag.

In the first step, a computer processor receives a listing of network requests made to a backend of a web application, where each entry in the listing of network requests includes a network address and at least one input parameter. The input parameter (also referred to as query parameter) comprises at least one key-value pair consisting of an input parameter key and a corresponding input parameter value. Each input parameter assigns a value to the input parameter key. The listing of network requests is typically taken from network requests made to the backend during ordinary operation of the web application. For each unique combination of network address and input parameter key in the listing of network requests, the computer processor formulates at least one probing request using the given network address and the given input parameter key, where the value of the input parameter key is set to a predefined payload and the predefined payload includes a specialized target specified by an identifying tag.
Hereby the predefined payload is crafted in such a way that it triggers the backend of the web application to send a response carrying the specialized target specified by the identifying tag to the frontend of the web application. In other words, upon execution of the payload by the backend of the web application, the backend sends a response, i.e. an answer to the probing request, carrying the identifying tag back to the frontend. The backend does not send a response in case the payload is "neutralized" in the backend of the web application, e.g. by so-called "escaping" the payload. Since the frontend of the web application runs in the memory (DOM) of a web browser and the web browser loads resources from the backend, the frontend sends another request (herein also called "second request") requesting the specialized target specified by the identifying tag from the backend. The "second request", i.e. the request after the probing request and after the frontend has received the response from the web application's backend, is indicative of an XSS vulnerability. After formulating probing requests, the probing requests are sent to the backend of the web application. The execution of the probing requests is monitored by agents instrumented in the web application, which monitor responses to the probing requests. If agents in the web application detect that in response to at least one probing request the frontend is requesting the specialized target specified by the identifying tag from the backend of the web application then it is reported that an XSS vulnerability for the web application was detected.

If in response to all probing requests it is found that the frontend never requested the target specified by the identifying tag from the backend then it is reported that no cross-site scripting vulnerability was detected.

According to a preferred embodiment of the disclosure, the method further comprises: capturing, by the agents instrumented in the web application, trace data for the network requests, where the trace data is indicative of network requests made in the web application; and storing, by the agents, the trace data in a database accessible by the computer processor. By doing so, network requests resulting from ordinary user interactions with the frontend of the web application are captured by agents instrumented in the web application as trace data. In response to user interactions with the frontend of the web application, the frontend sends network requests to the backend of the web application. The network requests made to the backend of the web application as well as the processing of the requests in the backend, are captured by agents instrumented in the web application as trace data. The trace data is stored in a database accessible by the computer processor.

In another preferred embodiment, the computer processor queries the trace data in the database to retrieve the listing of network requests made to the backend of the web application. The listing of network requests is used for formulating probing requests.

In order to eliminate privacy concerns, it is possible to obfuscate select values (e.g., user name, user identifier, password, payment data, and gender etc.) in the trace data prior to storing the trace data in the database.

According to yet another preferred embodiment, agents instrumented in the web application capture trace data for the probing request, and store the trace data in the database. After this, the computer processor queries trace data in the database for network requests requesting the specialized target specified by the identifying tag. If such trace data is found in the database indicative of a request for the specialized target specified by the identifying tag then a XSS vulnerability was detected in the web application. Such requests containing the specialized target specified by the identifying tag typically have the structure {protocol}:{hostname}/{path}/ID-TAG.

Since potentially many probing requests are sent to the backend of the web application, it is preferred to use a different identifying tag for each probing request. By doing so, trace data indicative of a XSS vulnerability is linked to the corresponding probing request by a matching identifying tag. Thus, the network request causing a vulnerability can be quickly identified.

According to a typical case, the network address is a uniform resource locator (short URL) and the probing requests are formatted in accordance with the Hypertext Transfer protocol (short HTTP).

The disclosed method is not limited to web applications having only one backend as it is equally suitable for web applications having multiple backend services. On the other hand, the web application typically has many different frontends running on web browsers. The frontend and the backend of the web application are typically connected via the Internet.

The objective technical problem is also solved by the claimed non-transitory computer-readable medium having computer-executable instructions. Advantageous embodiments are described in the dependent claims.

In particular, the technical problem is solved by a non-transitory computer-readable medium having computer-executable instructions that, upon execution of the instructions by a processor of a computer, cause the computer to

receive a listing of network requests made to a backend of a web application, each entry in the listing of network requests includes a network address and a key-value pair;

for each unique combination of network address and key found in the listing of network requests, formulate a probing request using a given network address and a given key, where value of the key is set to a predefined payload and the predefined payload includes an identifying tag, such that the predefined payload is configured to trigger the backend of the web application to send a response which includes the identifying tag;

send the probing request to the backend of the web application;

monitor responses to the probing requests using agents instrumented in the web application; and

report a vulnerability for the web application in response to the frontend requesting a target specified by the identifying tag.

If in response to all probing requests it is found that the frontend never requested the target specified by the identifying tag then the computer-executable instructions cause the computer to report no vulnerabilities for the web application.

According to another preferred embodiment, the computer-executable instructions cause the computer to capture trace data for the network requests by the agents instrumented in the web application, where the trace data is indicative of the network requests made in the web application; and store the trace data in a database accessible by the computer processor.

In another advantageous embodiment, the computer-executable instructions further cause the computer to query the trace data in the database to retrieve the listing of network requests made to the backend of the web application.

It is preferred to monitor responses to the probing requests by capturing trace data for the probing request using the agents instrumented in the web application; storing the trace data in the database; and querying the trace data in the database for network requests requesting the target specified by the identifying tag.

Also for the non-transitory computer-readable medium it is preferred to use a different identifying tag for each probing request.

In many cases it is useful that the network address is further defined as a uniform resource locator and the probing requests are formatted in accordance with the Hypertext Transfer protocol.

Further areas of applicability will become apparent from the description provided herein. The description and specific examples in this summary are intended for purposes of illustration only and are not intended to limit the scope of the present disclosure.

Drawings

The drawings described herein are for illustrative purposes only of selected embodiments and not all possible implementations, and are not intended to limit the scope of the present disclosure.

FIG. 1          schematically shows the monitoring of a web application during normal operation,
FIGs. 2a, 2b    show the formulation of probing requests/exploits using a code snippet library,
FIG. 3          schematically shows the monitoring and tracing of a web application during injection of probing requests,
FIG. 4          schematically shows a first variant of an instrumentation for the monitoring and tracing of an application,
FIG. 5          schematically shows a second variant of an instrumentation for the monitoring and tracing of an application, and
FIG. 6          schematically shows the main steps in a computer-implemented method for detecting cross-site scripting vulnerabilities in a web application.

Corresponding reference numerals indicate corresponding parts throughout the several views of the drawings.

Detailed description

Example embodiments will now be described more fully with reference to the accompanying drawings.

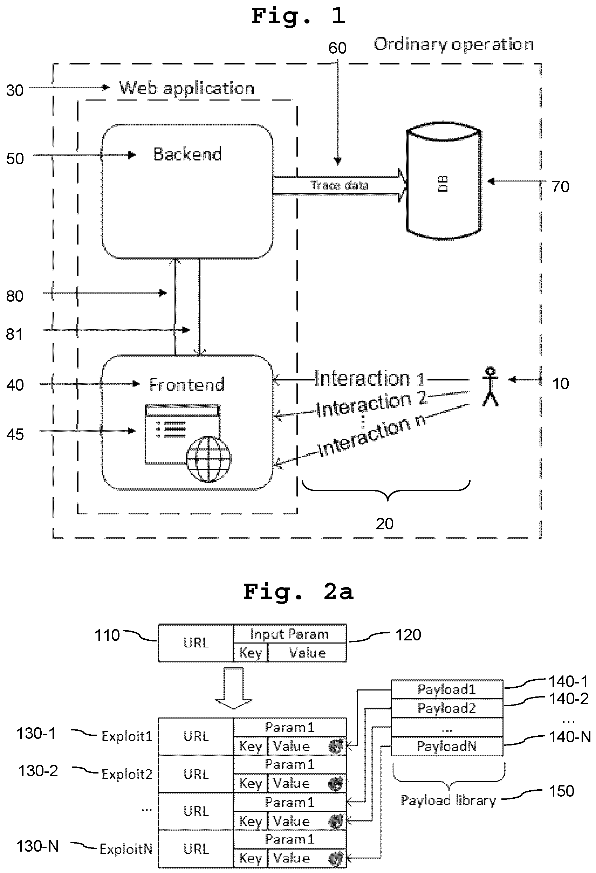

Fig. 1 schematically shows the steps in monitoring a web application 30 during normal/ordinary operation. The web application 30 comprises a frontend 40 and a backend 50. During everyday operation of the web application 30, users 10 perform interactions 20 with the frontend 40 of the web application 30. Typically, the frontend 40 runs in the Document Object Model (DOM) of a web browser 45. The DOM is created when the web browser 45 interprets the frontend 40 and represents the structure and content of the web page in memory. Typically, a user 10 interacts with the frontend 40 running on his computer. As multiple users 10 interact with the web application 30, multiple frontends 40 exist that are connected to the backend 50 via a network connection or the Internet. The frontend 40 allows users 10 to interact with elements of the web page, e.g. via JavaScript. In response to user interactions 20 with the web application 30, the frontend 40 sends network requests 80, e.g. HTTP requests, to the backend 50 for further processing. Thus, the backend 50 is shielded from direct user interactions. After processing a request 80 at the backend 50, the backend 50 sends a response 81 to the frontend 40. After having received the response 81 from the backend 50, the frontend 40 may e.g. output information to the user 10.

Assuming that the backend 50 of the web application 30 "testapp" can be accessed at the IP address 1.1.1.1, a HTTP request 80 to the backend 50 could read e.g., http://1.1.1.1/testapp?input='Hello'. In this request 80, the value of the input parameter key "input" is set to the value "Hello". The HTTP request 80 has the following structure:

$$\underbrace{http}_{Protocol} :// \underbrace{1.1.1.1}_{Hostname} / \underbrace{testapp}_{Path} ? \overbrace{\underbrace{input}_{Key} = \underbrace{'Hello'}_{Value}}^{Input\ parameter}$$

The request 80 comprises the protocol "http", the hostname "1.1.1.1", the path to the backend 50 of the web application 30 "testapp", and a question mark "?" followed by input parameters; in this case, the input parameter contains a single key-value pair, i.e. the input parameter key "input" having the value "Hello".

In response to interactions 20, monitoring agents instrumented in the backend 50 of the web application 30 generate trace data 60 (also called traces). It is well known in the prior art to store traces 60 in a database 70 to monitor the operation and performance of applications. Besides other data, traces contain data from HTTP requests 80 and responses 81 to HTTP requests 80. Without limitation, examples of trace data for HTTP requests 80 are:

```
        testapp?input='Message from user'
  or
        testapp?input='Textstring 123 submitted to app'.
```

The agents monitoring the backend 50 can be configured in such a way that i) no input parameter values (in the above examples 'Message from user' and 'Textstring 123 submitted to app') in traces are stored in the database 70 at all, or ii) that values for certain input parameter keys are removed or obfuscated. By doing this, privacy concerns can be alleviated.

According to the present disclosure, trace data 60 is not just used to monitor and optimize the operation and performance of the web application 30, but also to identify network requests made to the backend 50 of the web application 30. As shown later, unique combinations of URLs and input parameter keys are used to detect XSS vulnerabilities. According to Fig. 1, only traces 60 generated at the backend 50 are stored in the database 70. This, however, does not preclude that also traces generated at the frontend 40 or other software components are stored in the database 70. After collecting trace data 60 for multiple user interactions 20 in the database 70, the database 70 is queried for unique combinations of URLs and input parameter keys.

Let us assume that network requests 80 sent to the backend 50 have the structure given above and that trace data 60 in the database 70 comprise the following combinations of URLs and input parameters:

| URL | | Input parameter | | |
|---|---|---|---|---|
| | | Key | | Value |
| http://1.1.1.1/testapp | ? | input | = | 'A' |
| http://1.1.1.1/testapp | ? | input | = | 'B' |
| http://1.1.1.1/testapp | ? | input | = | 'C' |

In this case, querying the database 70 for trace data 60 containing unique combination of URLs and input parameter keys identifies only 1 unique combination of URL and input parameter key, namely

| URL | | Input parameter | | |
|---|---|---|---|---|
| | | Key | | Value |
| http://1.1.1.1/testapp | ? | input | = | 'A' |

Note that the printed value 'A' is irrelevant for unique combinations of URL and input parameter keys.

After having identified a listing of network requests, i.e. unique combinations of URLs and input parameter keys in trace data, probing requests are generated by injecting payloads into network requests. A payload can be injected either as a value for the respective input parameter key, i.e. replacing the original value of the input parameter key, or by adding the payload to the original value of the input parameter key. In these cases, the probing requests would read http://1.1.1.1/testapp?input='PAYLOAD' and http://1.1.1.1/testapp?input='APAYLOAD', respectively. Note that the term "PAYLOAD" is a placeholder for the respective payload to be injected.

It is noted that probing requests are crafted in a way that they are harmless. After all, the goal of probing requests is not to harm the web application 30 but rather to allow the automatic detection of XSS vulnerabilities in the web application. Payloads are crafted in such a way that they include an identifying tag ID-TAG and trigger the backend 50 to send a response containing the payload to the frontend 40. In response to the frontend 40 receiving the response, the frontend 40 sends another request to the backend 50 requesting a target specified by the identifying tag ID-TAG.

In a very simple example, let us consider the following payload:

| # | Payload |
|---|---------|
| 1 | <img src='ID-TAG'> |

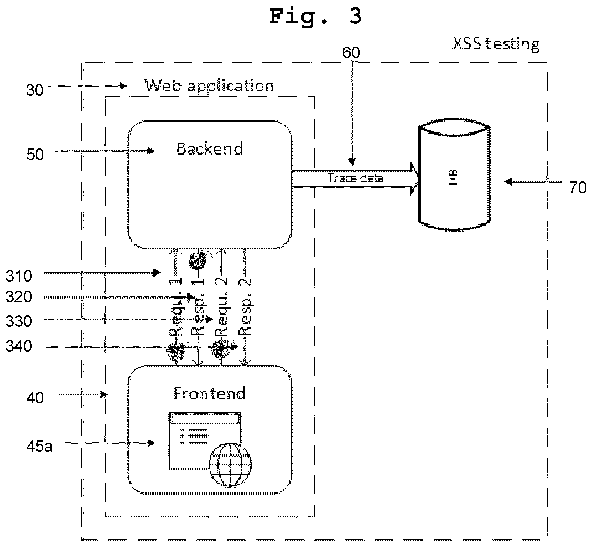

Payload1 is a simple HTML code that upon execution requests an image as a target. The image is specified by the identifying tag ID-TAG as path to the image. As an example, let us consider that the identifying tag ID-TAG is replaced by 'xss-det-xyz-123'. E.g., a request 80 (see Fig. 3) sent to the backend 50 of the web application 30 carrying Payload 1 for the input parameter key "input" could read http://1.1.1.1/testapp?input='<img src="xss-det-xyz-123">'.

In order to distinguish requests carrying a payload from requests not carrying a payload, requests carrying a payload are also called *exploits* or probing requests in this document.

The principle of XSS testing is explained in Fig. 3 for Payload1: In order to test whether the web application 30 is vulnerable to a request 310 carrying Payload1, the frontend 40 sends the request 310 http://1.1.1.1/testapp?input='<img src="xss-det-xyz-123">' to the backend 50 of the web application 30. In order to avoid any authentication issues at the backend 50, a browser 45 used for monitoring the ordinary operation of the web application 30 in Fig. 1 also performs XSS testing. Alternatively, the credentials from the web browser 45 in Fig. 1 may be used by the browser 45a performing XSS testing. If the web application 30 contains an XSS vulnerability for the tested input parameter "input", the backend 50 will process the request 310 and will send a response 320 containing Payload1 to the frontend 40 (also known as *reflected XSS*). After the frontend 40 has received the response 320, the web browser 45a at the frontend 40 will execute Payload1 contained in the response 320 and will send a second request 330 to the backend 50. The second request 330 has a similar structure as the initial request 310, however, this time the frontend 30 explicitly requests the specialized target specified by the identifying tag ID-TAG. E.g., the second request 330 could read http://1.1.1.1/testapp/xss-det-xyz-123. In case the specialized target 'xss-det-xyz-123' is not available at the backend 50, the backend would respond by sending a second response 340 containing an HTTP 404 error ("page not found" or "file not found") to the frontend 40. Also during XSS testing, the backend 50 of the web application 30 is monitored and thus generates trace data 60. Thus, the response 320 of the web application 30 to probing requests, i.e. the exploit 310 carrying Payload1, is monitored by agents instrumented in the backend 50 of the web application capturing trace data 60. Inter alia, the captured trace data 60 monitor requests 310, 330 and response to requests 320, 340. The generated trace data 60 is stored in the database 70 as during the monitoring of the ordinary operation of the web application 30 in Fig. 1. To be more precise, the monitoring system generates trace data 60 containing the initial request 310, the response 320, the second request 330 and even the second response 340 and stores the trace data 60 in the database 70.

After XSS testing the web application 30, the database 70 is queried for traces 60 requesting the specialized target specified by the identifying tag ID-TAG from the backend 50. For example, matching traces have the structure {protocol}:{hostname}/{path}/ID-TAG as in http://1.1.1.1/testapp/xss-det-xyz-123'. A hard proof for a XSS vulnerability has been found if trace data having this structure containing the identifying tag ID-TAG is found in the database 70.

If the payload, here Payload1, in the request 310 is neutralized in the backend 50, no response 320 containing the identifying tag ID-TAG 'xss-det-xyz-123' is sent back to the frontend 40 and consequently no second request 330 requesting the resource 'xss-det-xyz-123' is sent to the backend 50. Consequently, no traces 60 containing the identifying tag ID-TAG 'xss-det-xyz-123' having the structure {protocol}:{hostname}/{path}/ID-TAG are found in the database 70. In this case, the web application 30 does not contain a XSS vulnerability for the tested input parameter "input".

Further examples of payloads are given below:

| # | Payload |
|---|---------|
| 2 | style=animation-name:rotation onanimationstart=fetch('ID-TAG') |
| 3 | <script>xhr.open('GET','ID-TAG');</script> |

Similar to the first payload Payload1, also Payload2 and Payload3 are designed in a way that a probing request / exploit, i.e. a request carrying a payload, sent to the backend 50 will trigger the backend 50 to send a response carrying the respective payload to the frontend 40 of the web application 30. As the frontend 40 runs in the DOM of the web browser 45a, the frontend 40 makes another request requesting the specialized target specified by the identifying tag ID-TAG from the application's backend 50. With this procedure the disclosure is able to test, whether the web application 30 contains XSS vulnerabilities for multiple input parameters. If the web application 30 contains a XSS vulnerability for the tested input parameter then the identifying tag ID-TAG tag will be found in trace data generated in response to probing requests 310.

According to a typical example, when generating exploits a value in the combination of URL and input parameter key is changed to the respective payload, e.g., for Payload1 and the combination http://1.1.1.1/testapp?input='Hello', the value 'Hello' is changed to <img src="ID-TAG">. Thus, the respective exploit is http://1.1.1.1/testapp?input='<img src="ID-TAG">'. Other exploits can be formulated accordingly.

Adding payloads 1-3 to the initial request 20 and using 'xss-det-xyz-123' as identifying tag ID-TAG results in the following probing requests:

| # | Probing request / Exploit |
|---|---|
| 1 | http://1.1.1.1 /testapp?input='<img src="xss-det-xyz-123">' |
| 2 | http://1.1.1.1/testapp?input='style=animation-name:rotation onanimation-start=fetch('xss-det-xyz-123')' |
| 3 | http://1.1.1.1/testapp?input='<script>xhr.open('GET','xss-det-xyz-123'); </script>' |

Fig. 2a shows an example of adding N payloads 140-1 to 140-N contained in a payload library 150 to an URL 110 with a single input parameter Param1 120. N different payloads 140-1 to 140-N result in N exploits, namely Exploit1 130-1, Exploit2 130-2,...Exploit N 130-N.

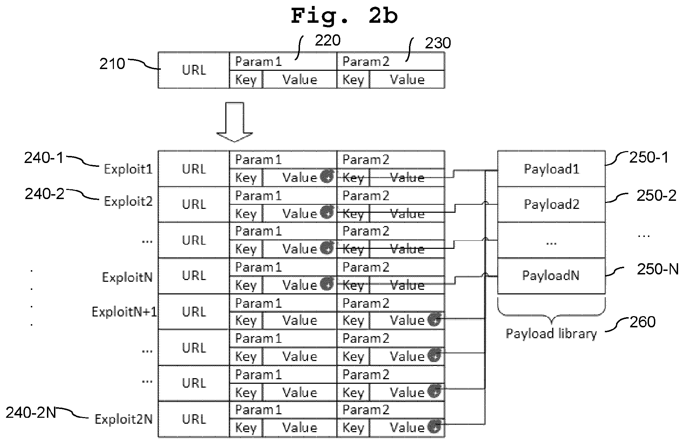

Fig. 2b shows another example where the URL 210 is followed by two input parameters, Param1 220 and Param2 230. Using N payloads 250-1 to 250-N in a payload library 260 results in 2*N exploits, namely Exploit1 240-1, Exploit2 240-2,...Exploit2N 240-2N.

The present disclosure is neither limited to one input parameter nor to one backend software component only. Let us consider the case with multiple input parameters. Assuming that the web application "testapp" accepts two input parameters, namely "input1" and "input2", as e.g., in the HTTP request: http://1.1.1.1/testapp?input1='Hello'&input2='Hi'.

Reusing the payloads Payload1... Payload3 mentioned above

Tab. 1 Payloads

| # | Payload |
|---|---|
| 1 | <img src="ID-TAG"> |
| 2 | style=animation-name:rotation onanimationstart=fetch('ID-TAG') |
| 3 | <script>xhr.open('GET','ID-TAG');</script> |

and using a constant identifying tag ID-TAG, generates the following probing requests:

| # | Field | Payload | Probing request / Exploit |
|---|---|---|---|
| 1 | 1 | 1 | http://1.1.1.1/testapp?input1='<img src='ID-TAG'>'&input2='Hi' |
| 2 | 2 | 1 | http://1.1.1.1/testapp?input1='Hello'&input2=<img src='ID-TAG'> |
| 3 | 1 | 2 | http://1.1.1.1/testapp?input1='style=animation-name:rotationonanimationstart=fetch('ID-TAG')'&input2='Hi' |
| 4 | 2 | 2 | http://1.1.1.1/testapp?input1='Hello'&input2='style=animation-name:rotationonanimationstart=fetch('ID-TAG')' |
| 5 | 1 | 3 | http://1.1.1.1/testapp?input1='<script>xhr.open('GET','ID-TAG');</script>'&input2='Hi |
| 6 | 2 | 3 | http://1.1.1.1/testapp?input1='Hello'&input2='<script>xhr.open('GET','ID-TAG');</script>' |

Tab. 2 Exploits for two input fields and constant identifying tags

Instead of using constant identifying tags, variable identifying tags can be used too. In the next example, the identifying tag consists of "ID-TAG" and an incremented integer variable, e.g. "ID-TAG1", "ID-TAG2"..."ID-TAGN". Doing so, generates the following probing requests:

| # | Field | Payload | Probing request / Exploit |
|---|---|---|---|
| 1 | 1 | 1 | http://1.1.1.1/testapp?input1='<img src='ID-TAG1'>'&input2='Hi' |
| 2 | 2 | 1 | http://1.1.1.1/testapp?input1='Hello'&input2=<img src='ID-TAG2'> |
| 3 | 1 | 2 | http://1.1.1.1/testapp?input1='style=animation-name:rotationonanimations-tart=fetch('ID-TAG3')'&input2='Hi' |
| 4 | 2 | 2 | http://1.1.1.1/testapp?input1='Hello'&input2='style=animation-name:rotation onanimationstart=fetch('ID-TAG4')' |
| 5 | 1 | 3 | http://1.1.1.1/testapp?input1='<script>xhr.open('GET','ID-TAG5');</script>'&input2='Hi' |
| 6 | 2 | 3 | http://1.1.1.1/testapp?input1='Hello'&input2='<script>xhr.open('GET','ID-TAG6');</script>' |

*Tab. 3 Exploits for two input fields and variable identifying tags*

In case variable identifying tags are used, traces 60 in the database 70 need to be queried for all identifying tags used in order to identify XSS vulnerabilities. The benefit of using variable identifying tags is that the probing request, i.e. a request 310 carrying a specific payload, causing the XSS vulnerability can be immediately identified by matching the identifying tags in the probing request and the trace data 60 in the database 70.

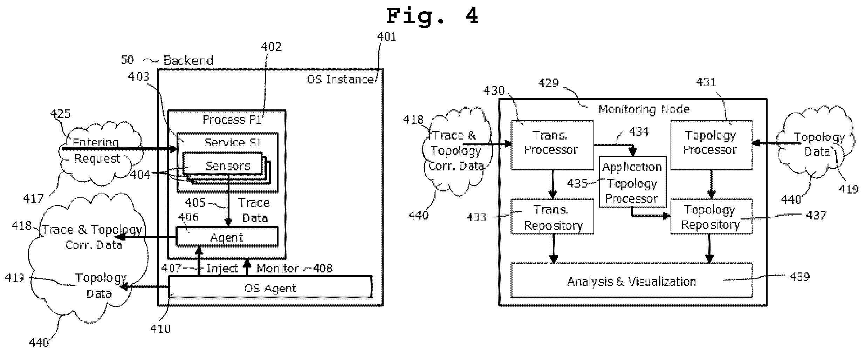

Fig. 4 shows an example for the instrumentation of a backend 50 of a web application in more detail. It is assumed that the computing node for the backend 50 runs one operating system 401 only, e.g. a Windows or Linux OS. Furthermore, it is assumed that the backend 50 comprises one process P1 402 running a service S1 403, e.g. a Java software code. The code of the service S1 403 is instrumented with various sensors 404. The injection 407 of sensors 404 into the code is triggered by an operation system agent 410. The OS agent 410 also triggers the monitoring 408 of the backend 50. The processing of an incoming request 425, e.g. a HTTP request transmitted by the internet 417, is monitored by sensors 404 generating trace data 405. Inter alia, trace data 405 related to the backend 50 comprises the entering request 425 itself, the origin of the request, i.e. whether the request was sent from another instrumented software application or from an external application, an identifier for the entity receiving the request 425 (in this case, the identifier of the service S1 403), the time the request 425 was received, the start time and the end time of executing service S1 403, the duration executing the service S1 403 etc. The agent 406 and the OS agent 410 related to the backend 50 process P1 402 send trace and topology correlation data 418 and topology data 419 to a monitoring node 429 via a network 440.

The monitoring node 429 receives trace and topology correlation data 418 as well as topology data 419 from the agent 406 and the OS agent 410 of the backend 50 of the web application. The processing of trace and topology correlation data 418 is done by a transaction processor 430, which saves data in a transaction repository 433, in Figs. 1 and 3 referred to as database 70. Processing of topology data 419 is done by a topology processor 431, which saves topology data in a topology repository 437. The topology data 419 is enriched by topology data 434 coming from the transaction processor 430 and being processed by an application topology processor 435. Data in the transaction repository 433 and the topology repository 437 can be analyzed, e.g. by querying the transaction repository alias the database 70 and visualized 439.

When monitoring the normal/ordinary operation of the web application 30 in Fig. 1, trace data 405 from sensors 404 from service S1 403 and trace and topology correlation data 418 from service S1 403 comprising the entering request 425 are stored in the transaction repository 433, i.e. the database 70, on the monitoring node 429. Querying the transaction repository 433 outputs unique combinations of URLs and input parameter keys in the requests 20, 425 sent from the frontend 40 to the backend 50. The unique combinations of URLs and input parameter keys constitute the listing of network requests on which probing requests / exploits 310 are based.

After formulating probing requests / exploits (240, 310 in Figs. 2a, 2b) by adding payloads 140, 250 comprising identifying tags ID-TAG to the input parameter fields 120, 220, 230 and sending the probing requests / exploits to the backend 50 of the web application 30, trace data 405 from service S1 403 is generated and sent to the monitoring node 429. The trace data 405 from service S1 403 and the trace and topology correlation data 418 from service S1 403 comprising responses sent from the backend 50 are stored in the transaction repository 433 at the monitoring node 429. If trace data from 60 the backend 50 comprising the identifying tag ID-TAG is found in the transaction repository 433 / database 70 then the web app 30 is found to be vulnerable to XSS exploits.

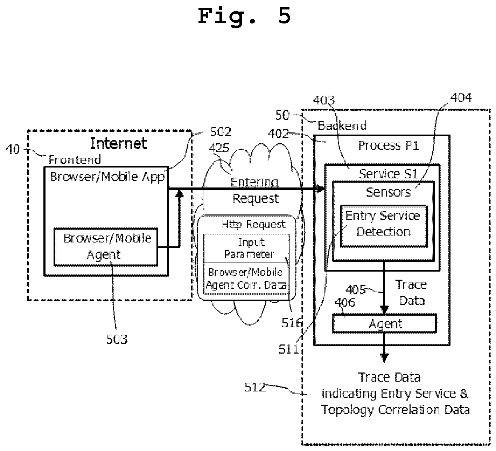

Fig. 5 shows an alternative instrumentation for the frontend 40 and backend 50 of a web application. In addition to the backend service S1 403 being instrumented with sensors 404 (in contrast to Fig. 4, Fig. 5 specifically mentions entry service detection sensors 511), a user running a browser or mobile app browser 502 (45, 45a in Figs. 1 and 3) is instrumented with a browser/mobile agent 503. The browser/mobile agent 503 located on the internet enriches requests, e.g. an entering HTTP request 425 carrying input parameters 516, with the identifier of the browser/mobile app 502 sending the request 425 to the backend 50. By doing so, it is possible to link the sender (the browser/mobile app 502) and the receiver (the service S1 403 at the backend 50) of the request 425. In Fig. 5, the monitoring node receiving trace data 405 indicating entry service and topology correlation data 512, 513 is not shown.

Further details about monitoring and tracing of applications are found in US 8,234,631 B2 and US 11,159,599 B2 of the applicant. The full content of these documents is incorporated by reference.

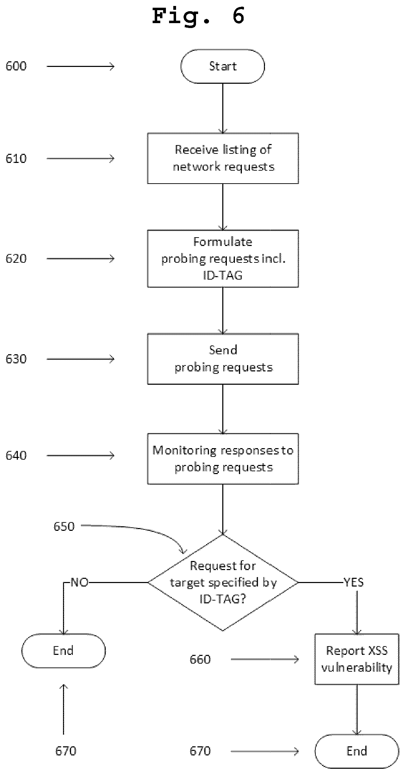

The main steps in the computer-implemented method for detecting cross-site scripting vulnerabilities in a web application are shown in Fig. 6. After the start of the method 600, a computer processor receives in step 610 a listing of network requests made to the backend 50 of a web application 30. For each unique combination of network address and input parameter key in the listing, the computer processor formulates in step 620 at least one probing request using the given network address and the given key, where the value of the key is set to a predefined payload and the predefined payload includes a specialized target specified by an identifying tag ID-TAG. The predefined payload is configured to trigger the backend 50 of the web application 30 to send a response 320 to the frontend 40 including the identifying tag ID-TAG. Typically, multiple payloads are used in order to cover a broad range of possible exploits. In step 630, the probing requests are sent to the backend 50 of the web application 30. Step 640 shows that the response of the web application 30 to the probing requests is monitored by agents instrumented in the web application generating trace data 60. The trace data 60 is typically stored in a database 70. Step 650 determines whether in response to a probing request, trace data 60 indicative of the frontend 40 requesting the specialized target containing the identifying tag ID-TAG from the backend 50 is contained in the database 70. If such trace data 60 if found in the database then step 660 reports that the web application 50 contains an XSS vulnerability. If no such trace data 60 is contained in the database 70 then no such report is made. The method ends with step 670.

The techniques described herein may be implemented by one or more computer programs executed by one or more processors. The computer programs include processor-executable instructions that are stored on a non-transitory tangible computer readable medium. The computer programs may also include stored data. Non-limiting examples of the non-transitory tangible computer readable medium are nonvolatile memory, magnetic storage, and optical storage.

Some portions of the above description present the techniques described herein in terms of algorithms and symbolic representations of operations on information. These algorithmic descriptions and representations are the means used by those skilled in the data processing arts to most effectively convey the substance of their work to others skilled in the art. These operations, while described functionally or logically, are understood to be implemented by computer programs. Furthermore, it has also proven convenient at times to refer to these arrangements of operations as modules or by functional names, without loss of generality.

Unless specifically stated otherwise as apparent from the above discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system memories or registers or other such information storage, transmission or display devices.

Certain aspects of the described techniques include process steps and instructions described herein in the form of an algorithm. It should be noted that the described process steps and instructions could be embodied in software, firmware or hardware, and when embodied in software, could be downloaded to reside on and be operated from different platforms used by real time network operating systems.

The present disclosure also relates to an apparatus for performing the operations herein. This apparatus may be specially constructed for the required purposes, or it may comprise a computer selectively activated or reconfigured by a computer program stored on a computer readable medium that can be accessed by the computer. Such a computer program may be stored in a tangible computer readable storage medium, such as, but is not limited to, any type of disk including floppy disks, optical disks, CD-ROMs, magnetic-optical disks, read-only memories (ROMs), random access memories (RAMs), EPROMs, EEPROMs, magnetic or optical cards, application specific integrated circuits (ASICs), or any type of media suitable for storing electronic instructions, and each coupled to a computer system bus. Furthermore, the computers referred to in the specification may include a single processor or may be architectures employing multiple processor designs for increased computing capability.

The algorithms and operations presented herein are not inherently related to any particular computer or other apparatus. Various systems may also be used with programs in accordance with the teachings herein, or it may prove convenient to construct more specialized apparatuses to perform the required method steps. The required structure for a variety of these systems will be apparent to those of skill in the art, along with equivalent variations. In addition, the present disclosure is not described with reference to any particular programming language. It is appreciated that a variety of programming languages may be used to implement the teachings of the present disclosure as described herein.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

**Claims**

1. A computer-implemented method for detecting cross-site scripting vulnerabilities in a web application, comprising:

   - receiving, by a computer processor, a listing of network requests made to a backend of a web application, each entry in the listing of network requests includes a network address and a key-value pair;
   - for each unique combination of network address and key found in the listing of network requests, formulating, by the computer processor, a probing request using a given network address and a given key, where value of the key is set to a predefined payload and the predefined payload includes an identifying tag, such that the predefined payload is configured to trigger the backend of the web application to send a response which includes the identifying tag;
   - sending, by the computer processor, the probing request to the backend of the web application
   - monitoring, by agents instrumented in the web application, responses to the probing requests; and
   - reporting a vulnerability for the web application in response to the frontend requesting a target specified by the identifying tag.

2. The method of claim 1, further comprising reporting no vulnerabilities for the web application in absence of the frontend requesting a target specified by the identifying tag.

3. The method of claim 1 or 2, further comprising:

   - capturing, by the agents instrumented in the web application, trace data for the network requests, where the trace data is indicative of the network requests made in the web application; and
   - storing, by the agents, the trace data in a database accessible by the computer processor.

4. The method of claim 3, further comprising querying, by the computer processor, the trace data in the database to retrieve the listing of network requests made to the backend of the web application.

5. The method of claim 3 or 4, further comprising obfuscating select values in the trace data prior to storing the trace data in the database.

6. The method of claim 5, wherein the obfuscated values is selected from a group consisting of user name, user identifier, password, payment data, and gender.

7. The method of any one of claims 3 to 6, wherein monitoring responses to the probing requests further comprises:

   - capturing, by the agents instrumented in the web application, trace data for the probing request;
   - storing, by the agents, the trace data in the database; and
   - querying, by the computer processor, the trace data in the database for network requests requesting the target specified by the identifying tag.

8. The method of any one of the preceding claims, further comprising using a different identifying tag for each probing request.

9. The method of any one of the preceding claims, wherein the network address is further defined as a uniform resource locator and the probing requests are formatted in accordance with the Hypertext Transfer protocol.

10. A non-transitory computer-readable medium having computer-executable instructions that, upon execution of the instructions by a processor of a computer, cause the computer to

- receive a listing of network requests made to a backend of a web application, each entry in the listing of network requests includes a network address and a key-value pair;
- for each unique combination of network address and key found in the listing of network requests, formulate a probing request using a given network address and a given key, where value of the key is set to a predefined payload and the predefined payload includes an identifying tag, such that the predefined payload is configured to trigger the backend of the web application to send a response which includes the identifying tag;
- send the probing request to the backend of the web application;
- monitor responses to the probing requests using agents instrumented in the web application; and
- report a vulnerability for the web application in response to the frontend requesting a target specified by the identifying tag.

11. The non-transitory computer-readable medium of claim 10, wherein the computer-executable instructions further cause the computer to report no vulnerabilities for the web application in absence of the frontend requesting a target specified by the identifying tag.

12. The non-transitory computer-readable medium of claim 10 or 11, wherein the computer-executable instructions further cause the computer to capture trace data for the network requests by the agents instrumented in the web application, where the trace data is indicative of the network requests made in the web application; and store the trace data in a database accessible by the computer processor.

13. The non-transitory computer-readable medium of claim 12, wherein the computer-executable instructions further cause the computer to query the trace data in the database to retrieve the listing of network requests made to the backend of the web application.

14. The non-transitory computer-readable medium of claim 12 or 13, wherein monitoring responses to the probing requests further comprises capturing trace data for the probing request using the agents instrumented in the web application; storing the trace data in the database; and querying the trace data in the database for network requests requesting the target specified by the identifying tag.

15. The non-transitory computer-readable medium of any one of claims 10 to 14, wherein a different identifying tag is used for each probing request.

# Fig. 1

60    Ordinary operation

30 ——→ Web application

50 ——→ Backend

Trace data

DB    ←—— 70

80

81

40 ——→ Frontend

45 ——→

Interaction 1 ——
Interaction 2 ——
Interaction n

10

20

# Fig. 2a

110 —    URL | Input Param | — 120
              Key | Value

                                Payload1   — 140-1
                                Payload2   — 140-2
                                ...
                                PayloadN   — 140-N

130-1 — Exploit1 | URL | Param1
                          Key | Value

130-2 — Exploit2 | URL | Param1
                          Key | Value

... | URL | Param1
            Key | Value

130-N — ExploitN | URL | Param1
                          Key | Value

Payload library — 150

# Fig. 2b

# Fig. 3

Fig. 4

# Fig. 5

# Fig. 6

600 ⟶ ( Start )

610 ⟶ Receive listing of network requests

620 ⟶ Formulate probing requests incl. ID-TAG

630 ⟶ Send probing requests

640 ⟶ Monitoring responses to probing requests

650 ⟶ Request for target specified by ID-TAG?

NO

YES

( End )

660 ⟶ Report XSS vulnerability

670

670 ⟶ ( End )

**EUROPEAN SEARCH REPORT**

Application Number

EP 25 17 0063

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2023/177166 A1 (BENSALIM SOUPHIANE [DE] ET AL) 8 June 2023 (2023-06-08) * paragraph [0003] - paragraph [0082]; claims 1, 2, 7, 14, 15; figures 1, 2, 4, 5 * | 1-15 | INV. G06F21/57 H04L9/40 |
| Y | US 8 683 596 B2 (AMIT YAIR [IL]; HAVIV YINNON A [IL] ET AL.) 25 March 2014 (2014-03-25) * column 4 - column 7; claims 1-4; figures 1,2 * | 1-15 | |
| A | US 9 460 291 B2 (AMIT YAIR [IL]; LANDA ALEXANDER [IL]; TRIPP OMER [IL]; IBM [US]) 4 October 2016 (2016-10-04) * column 2 - column 6; claim 1; figures 1-3 * | 1-15 | |
| A | US 8 949 990 B1 (HSIEH SHENG-CHI [TW] ET AL) 3 February 2015 (2015-02-03) * column 2 - column 8; claims 1-4; figures 1-4 * | 1-15 | TECHNICAL FIELDS SEARCHED (IPC) G06F H04L |
| A | ROBIN KIRCHNER?+ ET AL: "Dancer in the Dark: Synthesizing and Evaluating Polyglots for Blind Cross-Site Scripting", USENIX, USENIX, THE ADVANCED COMPUTING SYSTEMS ASSOCIATION , 27 August 2024 (2024-08-27), pages 1-19, XP061088710, Retrieved from the Internet: URL:http://www.usenix.org/system/files/usenixsecurity24-kirchner.pdf [retrieved on 2025-05-23] * Abstract, Sections 2-4 * | 1-15 | |

The present search report has been drawn up for all claims

| Place of search | Date of completion of the search | Examiner |
|---|---|---|
| Munich | 27 May 2025 | Wissing, Julio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 17 0063

This annex lists the patent family members relating to the patent documents cited in the above-mentioned European search report.
The members are as contained in the European Patent Office EDP file on
The European Patent Office is in no way liable for these particulars which are merely given for the purpose of information.

27-05-2025

| Patent document cited in search report | | Publication date | Patent family member(s) | | Publication date |
|---|---|---|---|---|---|
| US 2023177166 | A1 | 08-06-2023 | NONE | | |
| US 8683596 | B2 | 25-03-2014 | DE 102012218704 | A1 | 02-05-2013 |
| | | | GB 2496730 | A | 22-05-2013 |
| | | | US 2013111594 | A1 | 02-05-2013 |
| | | | US 2013111595 | A1 | 02-05-2013 |
| US 9460291 | B2 | 04-10-2016 | GB 2494738 | A | 20-03-2013 |
| | | | US 2013055397 | A1 | 28-02-2013 |
| | | | US 2013055402 | A1 | 28-02-2013 |
| | | | US 2017024567 | A1 | 26-01-2017 |
| | | | US 2017026402 | A1 | 26-01-2017 |
| US 8949990 | B1 | 03-02-2015 | NONE | | |

EPO FORM P0459

For more details about this annex : see Official Journal of the European Patent Office, No. 12/82

**EP 4 715 647 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8234631 B2

- US 11159599 B2